(19) Europäisches Patentamt
European Patent Office
Office européen des brevets

(11) EP 2 798 007 B1

(12) # EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **12810263.9**

(22) Anmeldetag: **20.12.2012**

(51) Int Cl.:
***C08L 69/00*** *(2006.01)*

(86) Internationale Anmeldenummer:
**PCT/EP2012/076308**

(87) Internationale Veröffentlichungsnummer:
**WO 2013/098176 (04.07.2013 Gazette 2013/27)**

(54) **POLYMERZUSAMMENSETZUNGEN MIT VERBESSERTER HAFTUNG**

POLYMER COMPOUND WITH IMPROVED ADHESION

COMPOSITION POLYMÈRE DOTÉE D'UNE ADHÉRENCE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2011 EP 11196095**

(43) Veröffentlichungstag der Anmeldung:
**05.11.2014 Patentblatt 2014/45**

(73) Patentinhaber: **Covestro Deutschland AG**
**51373 Leverkusen (DE)**

(72) Erfinder:
- **HUFEN, Ralf**
  **47239 Duisburg (DE)**
- **SEIDEL, Andreas**
  **41542 Dormagen (DE)**

(74) Vertreter: **Levpat**
**c/o Covestro AG**
**Gebäude 4825**
**51365 Leverkusen (DE)**

(56) Entgegenhaltungen:
**EP-A2- 0 249 964**
**WO-A1-2009/080244**
**WO-A1-2011/015286**
**US-A1- 2010 152 358**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 798 007 B1

## Beschreibung

Die vorliegende Erfindung betrifft Polycarbonat-Zusammensetzungen (PC-Zusammensetzungen), die in Verbundbauteilen in direktem Kontakt (primerlos) zu Polyurethan-basierten Komponenten wie beispielsweise Lacken, harten oder weichen Massivbeschichtungen oder Schäumen eine verbesserte Verbundhaftung aufweisen, sowie die Verbundbauteile und ein Verfahren zu ihrer Herstellung. Die Polyurethanschicht kann dabei beispielsweise zur Verbesserung der Oberflächeneigenschaften, der Haptik, der Optik, der Geräusch- und Wärmedämmung der Verbundbauteile dienen.

Die erfindungsgemäßen Zusammensetzungen weisen insbesondere im Verbund mit Polyurethan-basierten Lacken, vorzugsweise wasserbasierten Lacksystemen, eine verbesserte Lackhaftung auf. Bevorzugte erfindungsgemäße Zusammensetzungen weisen darüber hinaus eine Kombination aus hohem E-Modul, hoher Wärmeformbeständigkeit, niedrigem und weitgehend isotropen thermischen Ausdehnungskoeffizienten, geringer Verarbeitungsschwindung und hoher Schmelzefließfähigkeit auf und eignen sich insofern besonders bevorzugt zur Fertigung von großflächigen lackierten Automobil-Karosseriebauteilen.

Die Applikation Polyurethan-basierter Schichten auf Träger aus Polycarbonat-Zusammensetzungen ist aus dem Stand der Technik grundsätzlich bekannt, erfordert bei mineralverstärkten schlagzähmodifizierten Polycarbonatzusammensetzungen, welche für die Fertigung großflächiger Automobil-Karrosseriebauteile mit hohen Anforderungen an Zähigkeit, Steifigkeit und Maßhaltigkeit zum Einsatz kommen, jedoch zur Erzielung einer ausreichenden Verbundhaftung im Allgemeinen die zusätzliche Applikation eines Primers, d.h. einer haftvermittelnden Grundierungsschicht.

Im Zuge einer kostengünstigen und auch ökologisch günstigen Bauteilfertigung ist es, insbesondere seitens der Automobilindustrie, wünschenswert, Polycarbonat-Zusammensetzungen bereitzustellen, die in Verbundbauteilen in direktem Kontakt mit Polyurethan-basierten Schichten, d.h. auch ohne eine haftvermittelnde Grundierungszwischenschicht, eine verbesserte und somit ausreichende Verbundhaftung aufweisen.

EP 1355988 A1 beschreibt Polycarbonat-Zusammensetzungen enthaltend aromatisches Polycarbonat, anorganisches Material mit anisotroper Partikelgeometrie, bevorzugt Talk, kautschukmodifiziertes Vinyl(co)polymerisat und ein oder mehrere Komponenten ausgewählt aus der Gruppe der thermoplastischen kautschukfreien Vinyl(co)polymerisate und Polyalkylenterephthalate. Die Anmeldung gibt jedoch keinerlei Hinweise auf Vorteile solcher Zusammensetzungen mit einem bestimmten Verhältnis aus Polycarbonat, Polyalkylenterephthalat und Vinyl(co)polymerisat im Hinblick auf Lackhaftung.

Die WO 2011/015286 A1 beschreibt ein Verfahren zur Herstellung eines Verbundmaterials, in dem ein Polyurethanreaktionssystem auf eine geschäumte Polycarbonat-Formmasse aufgebracht wird.

Aufgabe der vorliegenden Erfindung war somit die Bereitstellung von thermoplastischen PC-Zusammensetzungen, insbesondere von mineralgefüllten und schlagzähmodifizierten PC-Zusammensetzungen mit guter Zähigkeit, Schmelzefließfähigkeit, hoher Wärmeformbeständigkeit, hoher Steifigkeit und niedrigem, weitgehend isotropen thermischen Ausdehnungskoeffizienten, welche in einer einem formgebenden thermischen Verfahrensschritt folgenden Beschichtung mit einem Polyurethan-basierten System, bevorzugt Lack, ohne die Aufbringung einer haftvermittelnden Zwischenschicht (Primer) zu einem guten Haftungsverhalten der Beschichtung auf dem Kunststoffträger fuhren.

Darüber hinaus bestand eine weitere Aufgabe darin, ein Beschichtungsverfahren unter Verzicht auf die Aufbringung einer haftvermittelnden Schicht (Primer) zu entwickeln, welches sich zur Herstellung Polyurethan-beschichteter Formteile aus schlagzähmodifizierten, mineralgefüllten PC-Zusammensetzungen bevorzugt für den Einsatz im Fahrzeugbau, insbesondere für Karosserieanwendungen mit hohen Anforderungen an die Bauteilpräzesion (Minimierung von Spaltmaßen) eignet, wobei sich die beschichteten Formteile durch eine verbesserte Haftung zwischen Kunststoffträger und Polyurethanschicht auszeichnen.

Ferner war es eine Aufgabe der vorliegenden Erfindung, mit Polyurethan-basierten Systemen beschichtete Formteile zur Verfügung zu stellen, die eine verbesserte Haftung zwischen den Schichten aufweisen.

Überraschenderweise wurde gefunden, dass schlagzähmodifizierte Polymerzusammensetzungen die vorliegende Aufgabe lösen, enthaltend:

A) 40 bis 62 Gew.-Teile aromatisches Polycarbonat und/oder Polyestercarbonat,

B) 14 bis 20 Gew.-Teile mindestens eines kautschukfreien und/oder kautschukmodifizierten Vinyl(co)polymerisats, wobei die kautschukmodifizierten Vinyl(co)polymerisate hergestellt sind im Masse-, Lösungs- oder Suspensionspolymerisationsverfahren,

C) 4 bis 10 Gew.-Teile mindestens eines kautschukmodifizierten Vinyl(co)polymerisats, hergestellt im Emulsionspolymerisationverfahren, bevorzugt mit Silikonacrylat-Komposit-Kautschuk als Pfropfgrundlage,

D) 4 bis 10 Gew.-Teile Polybutylenterephthalat,

E) 15 bis 25 Gew.-Teile Talk,

F) 0,3 bis 5 Gew.-Teile mindestens eines Polymeradditivs,

wobei die Summe der Anteile von Komponenten A bis F sich zu 100 Gew.-Teilen addiert.

In einer bevorzugten Ausführungsform besteht die Zusammensetzung aus den Komponenten A-D und F.

In einer weiter bevorzugten Ausführungsform besteht die Zusammensetzung aus den Komponenten A - F.

In einer weiter bevorzugten Ausführungsform wird als Komponente B eine Mischung aus einem kautschukfreien Vinyl(co)Polymerisat B.1 und einem kautschukhaltigen Vinyl(co)Polymerisat B.2 eingesetzt, wobei in einer besonders bevorzugten Ausführungsform B.2 in der Komponente B in einer Konzentration von 30 bis 70 Gew.-%, besonders bevorzugt in einer Konzentration von 40 bis 60 Gew.-%, jeweils bezogen auf die Summe aus B.1 und B.2, zum Einsatz kommt.

In einer bevorzugten Ausführungsform kommen Komponenten B bis D in solchen Konzentrationsverhältnissen zum Einsatz, dass das Gewichtsverhältnis y aus freiem, d.h. nicht chemisch an Kautschuk gebundenem Vinyl(co)polymerisat aus Komponenten B und C zu aromatischem Polyester gemäß Komponente D im Bereich 0,5 bis 6, bevorzugt im Bereich von 1 bis 5, und besonders bevorzugt im Bereich 1,5 bis 3 liegt. Das Verhältnis y berechnet sich aus den Gehalten der Komponenten B.1, B.2, C und D ([B.1], [B.2], [C] und [D]) und den Gelgehalten (G) in Gew.-% von Komponenten B.2 und C ($G_{B.2}$ und $G_C$) gemäß folgender Formel:

$$y = ([B.1] + [B.2]*(1-(G_{B.2}/100)) + [C]*(1-(G_C/100))) / [D].$$

In weiter bevorzugter Ausführungsform kommt Komponente D in einer Konzentration von 5 bis 25 Gew.-%, weiter bevorzugt von 6 bis 20 Gew.-% und besonders bevorzugt von 8 bis 16 Gew.-%, bezogen auf die Summe aus Komponenten A und D zum Einsatz.

**Komponente A**

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

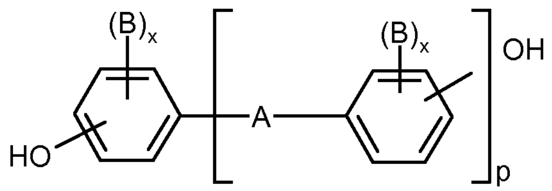

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

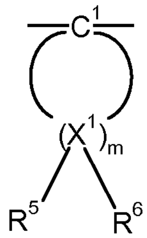

(II)

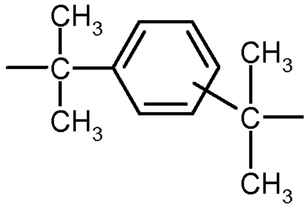

(III)

| | |
|---|---|
| B | jeweils $C_1$ bis $C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^5$ und $R^6$ | für jedes $X^1$ individuell wählbar, unabhängig voneinander Wasserstoff oder $C_1$ bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate zur Herstellung der Zusammensetzung liegt im Bereich 1,18 bis 1,4, vorzugsweise 1,20 bis 1,32, besonders bevorzugt 1,24 bis 1,30 (gemessen an Lösungen von 0,5 g Polycarbonat oder Polyestercarbonat in 100 ml Methylenchlorid-Lösung bei 25°C).

Das gewichtsgemittelte Molekulargewicht Mw der aromatischen Polycarbonate und Polyestercarbonate in der Zusammensetzung liegt bevorzugt im Bereich von 15.000 bis 35.000, weiter bevorzugt im Bereich von 22.000 bis 33.000, besonders bevorzugt 23.000 bis 28.000, bestimmt durch GPC (Gelpermeationschromatographie in Methylenchlorid mit Polycarbonat als Standard).

**Komponente B**

Die Komponente B umfasst ein oder eine Mischung mehrerer thermoplastische Vinyl(Co)Polymerisate (B.1) oder kautschukmodifizierter Vinyl(co)Polymerisate (B.2).

Geeignet sind als Vinyl(Co)Polymerisate (B.1) Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

B.1.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol und/oder (Meth)Acrylsäure-($C_1$-$C_8$)-Alkylester, wie Methylmethacrylat, Ethylmethacrylat, und

B.1.2 1 bis 50, vorzugsweise 20 bis 40 Gew.-Teilen Vinylcyanide (ungesättigte Nitrile) wie Acrylnitril und Methacrylnitril und/oder (Meth)Acryl-säure-($C_1$-$C_8$)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate sind harzartig, thermoplastisch und kautschukfrei. Besonders bevorzugt ist das Copolymerisat aus B.1.1 Styrol und B.1.2 Acrylnitril.

Die kautschukfreien (Co)Polymerisate gemäß B.1 sind bekannt und lassen sich durch radikalische Polymerisation, insbesondere durch Emulsions-, Suspensions-, Lösungs- oder Massepolymerisation herstellen.

Die (Co)Polymerisate besitzen vorzugsweise mittlere Molekulargewichte Mw (Gewichtsmittel, ermittelt durch Gelpermeationschromatographie (GPC) in Aceton als Lösungsmittel und mit Polystyrol als Standard) zwischen 15.000 und 200.000 g/mol, besonders bevorzugt zwischen 80.000 und 150.000 g/mol.

In einer besonders bevorzugten Ausführungsform ist B.1 ein Copolymerisat aus 75 bis 80 Gew.-% Styrol und 20 bis 25 Gew.-% Acrylnitril mit einem gewichtsgemittelten Molekulargewicht Mw von 80000 bis 130.000 g/mol.

Die als Komponente B.2 zum Einsatz kommenden kautschukmodifizierten Vinyl(co)polymerisate umfassen Pfropfpolymerisate mit kautschukelastischer Pfropfgrundlage, wobei die Pfropfung im Masse-, Lösungs-, oder Suspensionspolymerisationsverfahren erfolgt. Bevorzugte Pfropfpolymerisate gemäß Komponente B.2 umfassen Pfropfpolymerisate aus:

B.2.1) 70 bis 95 Gew.-Teilen, vorzugsweise 80 bis 93 Gew.-Teilen, insbesondere 85 bis 90 Gew.-Teilen einer Mischung aus

B.2.1.1) 50 bis 95 Gew.-Teilen, bevorzugt 70 bis 80 Gew.-Teilen Styrol, $\alpha$-Methylstyrol, methylkernsubstituiertem Styrol, $C_1$-$C_8$-Alkylmethacrylat, insbesondere Methylmethacrylat, $C_1$-$C_8$-Alkylacrylate, insbesondere Methylacrylat, oder Mischungen dieser Verbindungen und

B.2.1.2) 5 bis 50 Gew.-Teilen, bevorzugt 20 bis 30 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. -phenyl-N-substituierte Maleinimide oder Mischungen dieser Verbindungen auf

B.2.2) 5 bis 30 Gew.-Teilen, vorzugsweise 7 bis 20 Gew.-Teilen, insbesondere 10 bis 15 Gew.-Teilen einer kautschukelastischen Pfropfgrundlage.

Vorzugsweise hat die Pfropfgrundlage B.2.2) eine Glasübergangstemperatur unterhalb von -10°C, insbesondere unterhalb von -50°C.

Besonders bevorzugt ist eine Pfropfgrundlage B.2.2) auf Basis eines reinen Polybutadienkautschuks oder eines Polybutadien-Styrol-(SBR)-Copolymer-Kautschuks, wobei bei letzterem die beiden unterschiedlichen Monomere sowohl in Monomerblöcken als auch statistisch angeordnet sein können. Als Pfropfgrundlage B.2.2) können auch Mischungen verschiedener solcher Kautschuke zum Einsatz kommen.

Bevorzugte Pfropfpolymerisate gemäß Komponente B.2 sind insbesondere mit Styrol und/oder Acrylnitril und/oder (Meth-)Acrylsäurealkylestern gepfropfte Polybutadiene und/oder Butadien/Styrol-Copolymerisate. Der Gelanteil der Pfropfgrundlage B.2.2) beträgt vorzugsweise mindestens 70 Gew.-%. (in Toluol gemessen).

Der mittlere Teilchendurchmesser $d_{50}$ des Pfropfpolymerisats B.2 beträgt vorzugsweise 0,3 bis 5 $\mu$m, insbesondere 0,4 bis 1,5 $\mu$m.

Bevorzugte Pfropfpolymerisate B.2 besitzen Gelgehalte (gemessen in Toluol) von 10 bis 50 Gew.-%, vorzugsweise von 15 bis 40 Gew.-%, insbesondere von 20 bis 30 Gew.-%.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.2 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen, sofern in der vorliegenden Erfindung nicht anders angegeben, (W. Scholtan, H. Lange, Kolloid, Z. und Z. Polymere 250 (1972), 782-796) bestimmt werden.

Die Glasübergangstemperatur wird allgemein, sofern in der vorliegenden Erfindung nicht anders angegeben, mittels dynamischer Differenz-Thermoanalyse (DSC) gemäß der Norm DIN EN 61006 bei einer Heizrate von 10 K/min mit Definition der $T_g$ als Mittelpunkttemperatur (Tangentenmethode) mit Stickstoff als Schutzgas bestimmt.

Die Gelgehalte des Pfropfpolymerisats und der Pfropfgrundlage werden bei 25°C in einem geeigneten Lösungsmittel (bevorzugt Toluol) als der in diesem Lösungsmittel unlöslicher Anteil bestimmt (M. Hoffmann, H. Krömer, R. Kuhn, Polymeranalytik I und II, Georg Thieme-Verlag, Stuttgart 1977).

## Komponente C

Bei der Komponente C handelt es sich um ein Pfropfpolymer oder um eine Mischung aus mehreren Pfropfpolymeren, hergestellt im Emulsionpolymerisationsverfahren. Bevorzugt als Komponente C zum Einsatz kommende Pfropfpolymere umfassen ein oder mehrere Pfropfpolymerisate von

C.1 5 bis 80, vorzugsweise 20 bis 70, insbesondere 30 bis 50 Gew.-%, bezogen auf Komponente C, wenigstens eines Vinylmonomeren auf

C.2 95 bis 20, vorzugsweise 80 bis 30, insbesondere 70 bis 50 Gew.-%, bezogen auf Komponente C, einer oder mehrerer kautschukartiger Pfropfgrundlagen, wobei die Glasübergangstemperaturen der Pfropfgrundlagen vorzugsweise < 10°C, weiter bevorzugt < 0°C, besonders bevorzugt < -20°C, sind.

Die Pfropfgrundlage C.2 hat vorzugsweise eine mittlere Teilchengröße ($d_{50}$-Wert) von 0,05 bis 2 $\mu$m, weiter bevorzugt 0,1 bis 1 $\mu$m, und besonders bevorzugt 0,15 bis 0,6 $\mu$m.

Monomere C.1 sind vorzugsweise Gemische aus

C.1.1 50 bis 99, bevorzugt 60 bis 80, insbesondere 70 bis 80 Gew.-Teile, bezogen auf C.1, Vinylaromaten und/oder kernsubstituierten Vinylaromaten (wie Styrol, $\alpha$-Methylstyrol, p-Methylstyrol, p-Chlorstyrol) und/oder Methacrylsäure-($C_1$-$C_8$)-Alkylester, wie Methylmethacrylat, Ethylmethacrylat), und

C.1.2 1 bis 50, bevorzugt 20 bis 40, insbesondere 20 bis 30 Gew.-Teilen, bezogen auf C.1, Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, $\alpha$-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril. In einer weiteren bevorzugten Ausführungsform sind C.1.1 und C.1.2 Methylmethacrylat. In einer weiteren bevorzugten Ausführungsform sind C.1.1 Styrol und C.1.2 Methylmethacrylat.

Für die Pfropfpolymerisate C geeignete Pfropfgrundlagen C.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen C.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß C.1.1 und C.1.2).

Besonders bevorzugt ist reiner Polybutadienkautschuk.

Besonders bevorzugte Polymerisate C sind beispielsweise ABS oder MBS-Polymerisate.

Besonders geeignete Pfropfpolymerisate C besitzten eine Kern-Schale-Struktur.

Der Gelanteil der Pfropfgrundlage C.2 beträgt mindestens 30 Gew.-%, vorzugsweise mindestens 70 Gew.-%, insbesondere mindestens 80 Gew.-% (in Toluol gemessen).

Der Gelgehalt des Pfropfpolymers C beträgt mindestens 30 Gew.-%, vorzugsweise mindestens 50 Gew.-%, insbesondere mindestens 80 Gew.-% (in Toluol gemessen).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß C.2 sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

In einer besonders bevorzugten Ausführungsform handelt es sich bei den Pfropfpolymeren gemäß Komponente C um solche auf Basis von Silikonacrylat-Kompositkautschuken als Pfropfgrundlage C.2.

Die als Pfropfgrundlage C.2 zum Einsatz kommenden Silikonacrylat-Komposit-Kautschuke enthalten in bevorzugter Ausführungsform

C.2.1 20 bis 80 Gew.-%, besonders bevorzugt 30 bis 70 Gew.-%, insbesondere bevorzugt 40 bis 60 Gew.-% Silikonkautschuk- und

C.2.2 80 bis 20 Gew.-%, besonders bevorzugt 30 bis 70 Gew.-%, insbesondere bevorzugt 40 bis 60 Gew.-% Polyalkyl(meth)acrylatkautschuk,

wobei sich die beiden genannten Kautschuk-Komponenten C.2.1 und C.2.2 im Komposit-Kautschuk gegenseitig durchdringen, so daß sie sich nicht wesentlich voneinander trennen lassen.

Der Silikonkautschuk wird durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, bevorzugt zwischen 3 und 30 liegt, besonders bevorzugt zwischen 3 und 25, und insbesondere zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2=C(R^2)\text{-}COO\text{-}(CH_2)_p\text{-}SiR^1{}_nO_{(3-n)/2} \qquad \text{(V-1)}$$

$$CH_2=CH\text{-}SiR^1{}_nO_{(3-n)/2} \qquad \text{(V-2)}$$

oder

$$HS\text{-}(CH_2)_p\text{-}SiR^1{}_nO_{(3-n)/2} \qquad (V\text{-}3),$$

wobei

$R^1$ für $C_1$-$C_4$-Alkyl, vorzugsweise Methyl, Ethyl oder Propyl, oder Phenyl,
$R^2$ für Wasserstoff oder Methyl stehen,
n 0, 1 oder 2 und
p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Geeignete Polyalkyl(meth)acrylatkautschuk-Komponenten der Silikonacrylat-Kautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die $C_1$ bis $C_8$-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-$C_1$-$C_8$-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmittel verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk als wäßriger Latex hergestellt wird. Dabei wird der Silikonkautschuk durch Emulsionspolymerisation hergestellt, wie beispielsweise in US 2891920 und US 3294725 beschrieben. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators, bevorzugt auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wässrigen Natriumhydroxid, Kaliumhydroxid oder Natriumcarbonat-Lösung.

Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der Silikonacrylat-Pfropfkautschuke C werden die Monomere C.1 auf die Kautschuk-Grundlage C.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere C.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikonacrylat-Pfropfkautschuk wird der wässrige Latex in heißes Wasser gegeben, in dem zuvor Metallsalze gelöst wurden, wie z.B. Calciumchlorid oder Magnesiumsulfat. Dabei koaguliert der Silikonacrylat-Pfropfkautschuk und kann anschließend separiert werden.

## Komponente D

Erfindungsgemäß wird Polybutylenterephthalat als Komponente D verwendet. Die vorzugsweise verwendeten Polyalkylenterephthalate besitzen bevorzugt eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## Komponente E

Erfindungsgemäß kommen Füllstoffe auf Basis vonTalk zum Einsatz.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-%, bezogen auf die Gesamtmasse an Füllstoff aufweisen.

Unter Talk wird ein natürlich vorkommender oder synthetisch hergestellter Talk verstanden.

Reiner Talk hat die chemische Zusammensetzung $3\ MgO \cdot 4\ SiO_2 \cdot H_2O$ und somit einen MgO-Gehalt von 31,9 Gew.-%, einen $SiO_2$-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Besonders bevorzugte als Komponente E zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%. Die besonders bevorzugten Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße $d_{50}$ von 0,1 bis 20 $\mu$m, bevorzugt 0,2 bis 10 $\mu$m, weiter bevorzugt 0,5 bis 5 $\mu$m, noch weiter bevorzugt 0,7 bis 2,5 $\mu$m, und besonders bevorzugt 1,0 bis 2,0 $\mu$m.

Die erfindungsgemäß einzusetzenden mineralischen Füllstoffe auf Basis von Talk haben bevorzugt eine obere Teilchen- bzw. Korngröße $d_{97}$ kleiner 50 $\mu$m, bevorzugt kleiner 10 $\mu$m, besonders bevorzugt kleiner 6 $\mu$m und insbesondere bevorzugt kleiner 2,5 $\mu$m. Die $d_{97}$- und $d_{50}$-Werte von den Füllstoffen werden nach Sedimentationsanalyse mit SEDIGRAPH D 5 000 nach ISO 13317-3 bestimmt.

Die mineralischen Füllstoffe auf Basis von Talk können optional oberflächenbehandelt sein, um eine bessere Ankopplung an die Polymermatrix zu erzielen. Sie können beispielsweise mit einem Haftvermittlersystem auf Basis funktionalisierter Silane ausgerüstet sein.

Die teilchenförmigen Füllstoffe können bedingt durch die Verarbeitung zur Formmasse bzw. zu Formkörpern in der Formmasse bzw. im Formkörper einen kleineren $d_{97}$- bzw. $d_{50}$-Wert aufweisen, als die ursprünglich eingesetzten Füllstoffe.

**Komponente F**

Die Zusammensetzung enthält als Komponente F handelsübliche Polymeradditive.

Als handelsübliche Polymeradditive gemäß Komponente F kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel, Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle), IR-Absorbentien, optische Aufheller, fluoreszierende Additive, sowie Farbstoffe und Pigmente (beispielsweise Ruß, Titandioxid oder Eisenoxid), oder aber Mischungen mehrerer der genannten Additive in Frage.

Besonders bevorzugt enthalten die erfindungsgemäßen Zusammensetzungen mindestens ein Entformungsmittel, vorzugsweise Pentaerythrittetrastearatund mindestens einen Stabilisator, vorzugsweise ein phenolisches Antioxidanz, besonders bevorzugt 2,6-Di-tert-butyl-4-(octadecanoxycarbonylethyl)-phenol.

Weiter bevorzugt wird eine Stabilisatorkombination aus mindestens zwei Stabilisatoren eingesetzt, wobei der zweite Stabilisator eine brönstedt-saure Verbindung enthält. Vorzugsweise handelt es sich bei dem zweiten Stabilisator um Phosphorsäure, wässrige Phosphorsäurelösung oder um eine rieselfähige Abmischung aus Phosphorsäure oder einer wässrigen Phosphorsäurelösung mit einem feinteiligen hydrophilen Silicagel.

Die vorliegende Erfindung betrifft weiterhin aus den oben genannten Zusammensetzungen hergestellte Formteile, vorzugsweise flächige Formteile wie Platten und Karosserieteile wie Spiegelgehäuse, Kotflügel, Spoiler, Hauben, etc., die mindestens auf einer Seite des aus der erfindungsgemäßen Zusammensetzung hergestellten Basis eine Beschichtung mit einem Polyurethansystem (PU-System) aufweisen.

Die Polyurethanschicht kann dabei beispielsweise ein PU-Lack, ein PU-Schaum oder aber eine kompakte PU-Haut darstellen mit Polyurethanschichtdicken von beispielsweise 1 $\mu$m bis zu 20 cm.

In einer bevorzugten Ausführungsform handelt es sich bei der Polyurethanschicht um einen Lack mit einer Schichtdicke von 1 - 1000 $\mu$m, bevorzugt 5 - 100 $\mu$m, besonders bevorzugt 10 - 60 $\mu$m.

In einer weiteren bevorzugten Ausführungsform handelt es sich bei der Polyurethanschicht um eine kompakte Haut mit einer Schichtdicke von 1 mm - 10 mm.

In einer weiteren bevorzugten Ausführungsform handelt es sich bei der Polyurethanschicht um einen Schaum mit einer Schichtdicke von 4 mm - 20 cm.

Die Verbundbauteile aus Basis (Träger aus der erfindungsgemäßen thermoplastischen Zusammensetzung) und Polyurethanschicht können grundsätzlich in jeder bekannten Weise hergestellt werden.

Bevorzugt wird die Polyurethanschicht hergestellt durch Auspolymerisation eines reaktiven Polyurethanrohstoffgemischs enthaltend

- mindestens eine Polyisocyanat-Komponente,
- mindestens eine polyfunktionelle H-aktive Verbindung, und
- optional mindestens ein Polyurethan-Additiv und/oder Prozesshilfsstoff

in direktem Kontakt mit dem zuvor aus der thermoplastischen Zusammensetzung geformten und erstarrten Träger.

Das Trägerbauteil kann beispielsweise aus der erfindungsgemäßen Zusammensetzung vorgefertigt und darauf das reaktive Polyurethanrohstoffgemisch aufgebracht und ausreagiert werden. Je nach Reaktivität der Polyurethanreaktionskomponenten können diese bereits vorgemischt sein oder während des Auftragens in bekannter Weise vermischt werden. Das Auftragen kann unter anderem durch Sprühen, Rakeln oder Kalandrieren erfolgen.

In einer bevorzugten Ausführungsform wird vor der Aufbringung des reaktiven Polyurethangemisches die Trägeroberfläche gereinigt, vorzugsweise mit Isopropanol, und weiter bevorzugt zusätzlich zur Aktivierung der Oberfläche beflammt.

Es ist aber auch möglich, die erfindungsgemäßen Verbunde durch Coextrusion nach bekannten Methoden herzustellen.

Für den Fall, dass geschäumte Verbunde hergestellt werden sollen, kann in an sich bekannter Weise das Reaktionsgemisch in eine Form enthaltend das vorab geformte und erstarrte Trägerbauteil eingetragen werden. Optional kann die Form auch eine weitere Dekorschicht (oft "Haut" genannt) aus z.B. Polyvinylchorid (PVC), thermoplastischen Polyolefinen (TPO), thermoplastischen Polyurethan (TPU) oder Polyurethansprühhaut enthalten. In der Form schäumt das schäumfähige Reaktionsgemisch in Kontakt mit dem Trägerbauteil und gegebenenfalls der Dekorschicht auf und

bildet das Verbundbauteil. Die Formverschäumung kann dabei so durchgeführt werden, dass das Verbundbauteil an seiner Oberfläche eine Zellstruktur aufweist. Sie kann aber auch so durchgeführt werden, dass das Verbundbauteil eine kompakte Haut und einen zelligen Kern aufweist (Integralschaumstoffe). Die Polyurethankomponenten können mit Hockdruck- oder Niederdruckmaschinen in die Form eingebracht werden.

Polyurethanschaumstoffe können auch als Block-Schaumstoff hergestellt werden.

Die Herstellung von Polyurethan-Verbundkörpern kann auch in Sandwichbauweise erfolgen. Das Verfahren kann dabei sowohl als Depot-, oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

In einer speziellen Ausführungsform der Erfindung werden die Verbundbauteile herstellt durch ein Verfahren in dem

(i) in einem ersten Verfahrensschritt die Schmelze der thermoplastischen Zusammensetzung in eine erste Werkzeugkavität eingespritzt und nachfolgend abgekühlt wird,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend

- mindestens eine Polyisocyanat-Komponente,
- mindestens eine polyfunktionelle H-aktive Verbindung, und
- optional mindestens ein Polyurethan-Additiv und/oder Prozesshilfsstoff

gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert, und

(iv) im vierten Verfahrensschritt das Verbundbauteil aus der Werkzeugkavität entformt wird.

Polyurethane

Als Beschichtung wird vorzugsweise ein Polyurethanschaum oder eine kompakte Polyurethanschicht eingesetzt.

Die erfindungsgemäß zum Einsatz kommenden Polyurethane erhält man durch Umsetzung von Polyisocyanaten mit H-aktiven polyfunktionellen Verbindungen, vorzugsweise Polyolen.

Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt $\geq 2$, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), $\omega,\omega'$-Diisocyanato-1,3-dimethylcyclohexan ($H_6XDI$), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalendiisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie

beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)-methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000, vorzugsweise 600 bis 12.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000, vorzugsweise 800 bis 4.000, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 26 vorzugsweise 15 bis 26 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie verwendeten Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 600 mg KOH/g und einer mittleren Funktionalität von 2 bis 6. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein ausgewählt aus der Gruppe, die Amine und Aminoalkohole, beispielsweise Ethanolamin, Diethanolamin, Diisopropanolamin, Ethylendiamin, Triethanolamin, Isophrondiamin, N,N'-dimethyl(diethyl)-ethylendiamin, 2-amino-2-methyl (oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte

bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

a) Wasser und/oder leicht flüchtige anorganische oder organische Substanzen als Treibmittel Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, $CO_2$ oder $N_2O$ in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

b) Katalysatoren
Bei den Katalysatoren handelt sich beispielsweise um
tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol),
monocyclische und bicyclische Amide, Bis-(dialkylamino)alkylether,
Amidgruppen (vorzugsweise Formamidgruppen) aufweisende tertiäre Amine,
Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol),
gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid,
sekundärtertiäre Amine,
Silaamine mit Kohlenstoff-Silicium-Bindungen (2,2,4-Trimethyl-2-silamorpholin und 1,3-Diethylaminomethyltetramethyldisiloxan),
stickstoffhaltige Basen (wie Tetraalkylammoniumhydroxide),
Alkalihydroxide (wie Natriumhydroxid, Alkaliphenolate wie Natriumphenolat),
Alkalialkoholate (wie Natriummethylat), und/oder
Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe wie Emulgatoren und Schaumstabilisatoren.
Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

d) Reaktionsverzögerer
Als Reaktionsverzögerer kommen z.B. sauer reagierende Stoffe (wie Salzsäure oder organische Säurehalogenide) in Frage.

e) Additive
Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Trischlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

Erfindungsgemäß zu verwendende Lacke umfassen 1-K und 2-K-Lacksysteme, vorzugsweise Wasserlacke. Ein Zweikomponentenlack (2-K) im Sinne der Erfindung enthält neben dem erfindungsgemäßen Wasserlack noch einen Härter.

Gemäß einer Ausführungsform handelt es sich bei dem erfindungsgemassen Wasserlack um einen Einkomponentenlack.

In einer alternativen Ausführungsform ist die mindestens einseitige Beschichtung ein wasserbasierter 2-Komponenten Polyurethanlack.

Die Beschichtung weist mindestens eine Lackschicht (Basislack) und vorzugsweise eine Schutzschicht (Decklack) auf. Besonders bevorzugt ist der Basislack zweischichtig.

Erfindungsgemäß zu verwendende 2-Komponenten Polyurethanlacke sind dadurch gekennzeichnet, dass sie im wesentlichen enthalten:

(a) Polyisocyanate, die gegebenenfalls hydrophiliert sind, gegebenenfalls in Gegenwart organischer Lösemittel oder Lösemittelgemische,

(b) Verbindungen mit gegenüber Isocyanaten reaktiven Gruppen, gegebenenfalls hydrophiliert, in Wasser und gegebenenfalls in Gegenwart organischer Lösemittel oder Lösemittelgemische,

(c) gegebenenfalls weitere Zusatzstoffe und Hilfsmittel,

wobei die Mengen von (a) + (b) von 20 bis 100 Gew.-Teilen, die Menge an (c) von 0 bis 80 Gew.-Teilen betragen, mit der Maßgabe, dass die Summe der Gewichtsteile der Einzelkomponenten (a) bis (c) 100 beträgt.

Unter Zweikomponentensystemen im Sinne der vorliegenden Erfindung versteht man Lacke, bei denen die Komponenten (a) und (b) aufgrund ihrer Reaktivität in getrennten Gefäßen gelagert werden müssen. Die beiden Komponenten werden erst kurz vor Applikation gemischt und reagieren dann im allgemeinen ohne zusätzliche Aktivierung.

Bei der (Poly)-isocyanatkomponente (a) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind oder zu diesem Zweck mit Lösungsmitteln verdünnt sind. Die Polyisocyanatkomponente (a) weist bei 23°C eine Viskosität von 10 bis 15000, vorzugsweise 10 bis 5000 mPas auf. Besonders bevorzugt handelt es sich bei der Polyisocyanatkomponente (a) um Polyisocyanate oder Polyisocyanatgemische mit ausschließlich aliphatisch und/oder cycloaliphatisch gebundenen Isocyanatgruppen einer zwischen 2,0 und 5,0 liegenden (mittleren) NCO-Funktionalität und einer Viskosität bei 23°C von 10 bis 2000 mPas.

Bevorzugt werden als Vernetzer Polyisocyanate mit freien NCO-Gruppen eingesetzt, um aus den wässrigen Zweikomponenten-Polyurethanlacken ein besonders hohes lacktechnisches Niveau zu erhalten. Geeignet als solche Vernetzerharze sind beispielsweise Polyisocyanate auf Basis von Isophorondiisocyanat (IPDI), Hexamethylendiisocyanat (HDI), 1,4-Diisocyanatocyclohexan, Bis-(4-isocyanatocyclohexyl)-methan, 1,3-Diisocyanatobenzol, 2,4- und/oder 2,6-Diisocyanatotoluol (TDI), Diisocyanato-diphenylmethan (MDI) sowie ω,ω'-Diisocyanato-1,3-dimethylcyclohexan ($H_6$XDI). Bevorzugt sind Polyisocyanate auf Basis von Isophorondiisocyanat, Hexamethylendiisocyanat, Bis-(4-isocyanatocyclohexyl)-methan und ω,ω'-Diisocyanato-1,3-dimethylcyclohexan ($H_6$XDI).

Die genannten Diisocyanate können gegebenenfalls als solche verwendet werden, in der Regel finden jedoch Derivate der Diisocyanate Verwendung. Als Derivate geeignet sind Polyisocyanate enthaltend Biuret-, Isocyanurat-, Uretdion-, Urethan-, Iminooxadiazindion-, Oxadiazintrione-, Carbodiimid-, Acylharnstoff und Allophanatgruppen.

Bevorzugte Derivate sind solche mit Isocyanurat, Iminooxadiazindion und Uretdion-Strukturen. Besonders bevorzugt sind monomerenarme Lackpolyisocyanate mit diesen Strukturelementen aus Isophorondiisocyanat (IPDI), Hexamethylendiisocyanat (HDI), 1,4-Diisocyanatocyclohexan, Bis-(4-isocyanatocyclohexyl)-methan.

Geeignet sind auch Triisocyanate wie z.B. TIN (Triisocyanatononan).

Die (Poly)-isocyanatkomponente (a) kann gegebenenfalls hydrophil modifiziert sein. Wasserlösliche bzw. -dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielweise in der EP-A 0 540 985, S. 3, Z 55 - S. 4 Z. 5 beschrieben. Gut geeignet sind auch die in der EP-A-0 959 087, S. 3 Z. 39-51 beschriebenen Allophanatgrupen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 10 007 821, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10 024 624, S. 3 Z. 13 - 33 oder auch in der WO 01/88006 beschrieben sind. Ebenso möglich ist die externe Hydrophilierung durch Zusatz von Emulgatoren.

Der NCO-Gehalt der verwendeten Polyisocyanatkomponente (a) kann z.B. bei sogenannten Polyether-Allophanaten (Hydrophilierung mittels eines Polyethers) von 5 - 25 Gew.-% reichen. Bei einer Hydrophilierung mit Sulfonsäuregruppen können NCO-Gehalte von 4 - 26 Gew.-% erreicht werden, wobei diese Zahlen nur beispielhaft zu verstehen sind.

Die eingesetzten Isocyanatkomponenten können auch teilweise, z.B. bis zu einem Drittel der vorhandenen Isocyanatgruppen mit gegenüber Isocyanaten reaktiven Komponenten blockiert sein. In diesem Fall kann es in einem späteren Schritt zu Reaktion der blockierten Isocyanatkomponente mit weiterem Polyol kommen, um eine weitere Vernetzung herbeizuführen.

Geeignete Blockierungsmittel für diese Polyisocyanate sind beispielsweise einwertige Alkohole wie Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Bevorzugt ist der Einsatz niedrigviskoser, hydrophober oder hydrophilierter Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate, da sich so ein besonders hohes Eigenschaftsniveau des Lackfilms erreichen lässt. Die Vorteile der erfindungsgemäßen Bindemittel-Dispersionen treten in Kombination mit diesen Vernetzern am deutlichsten zutage. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden.

Prinzipiell ist natürlich auch der Einsatz von Mischungen verschiedener Polyisocyanate möglich.

Als Verbindungen mit gegenüber Isocyanaten reaktiven Gruppen (b) sind beispielweise Hydroxylgruppen, Sulfonat- und/oder Carboxylatgruppen, vorzugsweise Carboxylatgruppen und gegebenenfalls Sulfonsäure und/oder Carboxylgruppen, vorzugsweise Carboxylgruppen aufweisende Polymerisate von olefinisch ungesättigten Monomeren (sogenannte Polyacrylat-Polyole), von Kombinationen aus Diolen und Dicarbonsäuren (sogenannte Polyester-Polyole), von Kombinationen aus Diolen, Dicarbonsäuren und Diisocyanaten (sogenannte Polyurethan-Polyole) und/oder von Hybridsystemen aus den genannten Polyolklassen, beispielweise Polyacrylat-Polyesterpolyole, Polyacrylat-Polyurethanpolyole, Polyester-Polyurethanpolyole oder Polyester-Polyurethanpolyole, die vorzugsweise ein nach der Gelpermeationschromatographie bestimmbares Molekulargewicht $M_n$ (Zahlenmittel) von 500 bis 50000, insbesondere 1000 bis 10000, eine Hydroxylzahl von 16,5 bis 264, vorzugsweise 33 bis 165 mg KOH/g Festharz, eine Säurezahl (bezogen auf die nicht neutralisierten Sulfonsäure-und/oder Carboxylgruppen) von 0 bis 150, vorzugsweise 0 bis 100 mg KOH/g Festharz und ein Gehalt an Sulfonat- und/oder Carboxylgruppen von 5 bis 417, vorzugsweise 24 bis 278 Miliäquivalenten pro 100 g Feststoff aufweisen, geeignet.

Besonders bevorzugt handelt es sich bei diesen anionischen Gruppen um Carboxylatgruppen. Eine Übersicht über verschiedene Bindemittel wird z.B. in EP-A 0 959 115, S. 3 Z. 26 - 54 gegeben. Es können jedoch auch einfache Diolkomponenten verwendet werden. Prinzipiell sind als Bindemittelkomponente (b) alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind. Bevorzugt sind jedoch Polyole, also Verbindungen mit freien OH-Gruppen.

Die Bindemittelkomponente (b) kommen bei der Herstellung der Beschichtungsmittel im allgemeinen in Form von 10- bis 60-, vorzugsweise 20- bis 50-gew.-%igen wässrigen Lösungen und/oder Dispersionen zum Einsatz, die im allgemeinen eine Viskosität von 10 bis $10^5$, vorzugsweise 100 bis 10000 mPa.s/23°C und pH-Werte von 5 bis 10, vorzugsweise 6 bis 9 aufweisen. Gegebenenfalls können Hilfslösungsmittel verwendet werden.

In Abhängigkeit vom Molekulargewicht der Bindemittelkomponente (b) und ihrem Gehalt an anionischen Gruppen bzw. an freien Säuregruppen, insbesondere Carboxylgruppen handelt es sich bei den wässrigen, die Polymerisate enthaltenden Systemen um echte Dispersionen, kolloiddisperse oder molekulardisperse Dispersionen, im allgemeinen jedoch um sogenannte "Teildispersionen", d.h. um wässrige Systeme, die zum Teil molekulardispers und zum Teil kolloiddispers sind.

Das Verhältnis von Isocyanatgruppen aus Komponente (a) zu isocyanatreaktiven Gruppen wie Hydroxylgruppen (NCO-OH Verhältnis) aus Komponente (b) kann einen weiten Bereich umfassen. So ist ein Verhältnis von 0,2:1,0 bis 4,0:1,0 für lacktechnische Anwendungen nutzbar. Bevorzugt ist ein Bereich von 0,35:1 bis 2,0:1,0, besonders bevorzugt 1,0:1,0 bis 1,5:1,0.

Optional können der Zusammensetzung 1 bis 10000 ppm handelsübliche Katalysatoren zugesetzt werden.

Vor, während oder nach der Herstellung der erfindungsgemäßen wässrigen Bindemitteldispersion und auch im Fall der Herstellung der Beschichtungsmitteln durch Zugabe mindestens eines Vernetzers können die üblichen Hilfs- und Zusatzmittel der Lacktechnologie (d) zugesetzt werden, wie z.B. Entschäumungsmittel, Verdickungsmittel, Pigmente, Dispergierhilfsmittel, weitere von (c) verschiedene Katalysatoren, Hautverhinderungsmittel, Antiabsetzmittel oder Emulgatoren.

Die erfindungsgemäßen Zweikomponenten Polyurethansysteme enthalten als Lösungsmittel Wasser und gegebenenfalls organische Lösemittel oder deren Gemische.

Als organische Lösungsmittel können alle bekannten Lösemittel verwendet werden. Bevorzugt sind die in der Lackindustrie verwendeten Lösemittel wie Xylol, Butylacetat, Ethylacetat, Butylglykolacetat, Butoxyl, Methoxypropylacetat, Kohlenwasserstoffe wie Solvesso® 100 (Exxon Mobil Chemicals) (alternativ kann auch Sovent Naphta verwendet werden) oder N-Methylpyrrolidon.

Die organischen Lösemittel kommen, wenn überhaupt, in der Regel nur in den gerade notwendigen Mengen zum Einsatz. So zum Beispiel zum Vorverdünnen der eingesetzten Polyisocyanate (a) oder in der zur Herstellung der in Wasser gelösten oder dispergierten Bindemittelkomponente (b) gerade benötigten Menge.

## Beispiele

### Komponente A

Lineares Polycarbonat auf Basis Bisphenol-A mit einer relativen Lösungsviskosität ($\eta_{rel}$) (gemessen an Lösungen von 0,5 g Polycarbonat in 100 ml Methylenchlorid bei 25°C) von 1,28.

**Komponente B.1**

Kautschukfreies Copolymerisat, hergestellt im Masse-Polymerisationsverfahren, aus 76 Gew.-% Styrol und 24 Gew.-% Acrylnitril mit einem gewichtsgemittelten Molekulargewicht Mw von 130 kg/mol (bestimmt mit GPC mit Polystyrol als Standard).

**Komponente B.2**

ABS-Polymerisat hergestellt durch Masse-Polymerisation von 88 Gew.-%, bezogen auf das ABS-Polymerisat, einer Mischung aus 24 Gew.-% Acrylnitril und 76 Gew.-% Styrol in Gegenwart von 12 Gew.-%, bezogen auf das ABS-Polyermisat, eines linearen Polybutadienkautschuks. Das ABS-Polymerisat besitzt einen Gelgehalt bestimmt in Toluol von 25 Gew.-%.

**Komponente C**

Pfropfpolymerisat, hergestellt im Emulsionspolymerisationsverfahren und mit einem Gelgehalt bestimmt in Toluol von 95 Gew.-%, bestehend aus 28 Gew-% Styrol-Acrylnitril-Copolymer als Hülle mit einem Gewichtsverhältnis von Styrol zu Acrylnitril von 71 : 29 auf 72 Gew.-% einer teilchenförmigen Pfropfgrundlage als Kern bestehend aus 46 Gew.-% Silikonkautschuk und 54 Gew.-% Butylacrylatkautschuk.

**Komponente D-1**

Polybutylenterephthalat (z.B. Pocan B1300, Lanxess AG, Köln, Deutschland) mit einer Viskositätszahl von 1,05 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

**Komponente D-2**

Polyethylenterephthalat (z.B. RT6020, Invista, Gersthofen, Deutschland) mit einer intrinsischen Viskosität von 0,664 dl/g, gemessen in Dichloressigsäure in einer Konzentration von 1 Gew.-% bei 25°C.

**Komponente E-1**

Talk mit einem mittleren Partikeldurchmesser $D_{50}$ von 1,2 μm gemessen mittels Sedigraph und mit einem $Al_2O_3$-Gehalt von 0,5 Gew.-%.

**Komponente E-2**

Wollastonit mit einem mittleren Partikeldurchmesser $D_{50}$ von 7 μm und einer Oberfläche von 2,9 $m^2/g$ gemessen mittels Microtrac Partikel-Analyse

**Komponente E-3**

Bor-Aluminium Glasfaser mit einem Durchmesser von 13μm und einer Schnittlänge von 2,5 - 3,5 **mm.Komponente F-1**

Pentaerythrittetrastearat als Gleit-/Entformungsmittel

**Komponente F-2**

Thermostabilisator Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)-phenol) (BASF AG, Ludwigshafen, Deutschland)

**Komponente F-3**

Rieselfähige Abmischung aus 75 Gew.-% konzentrierte Phosphorsäure und 25 Gew.-% hydrophiles Silica-Gel.

**Komponente F-4**

Ruß

**Herstellung der Formmassen**

Die erfindungsgemäßen Formmassen, enthaltend die Komponenten A bis F werden hergestellt auf einem Doppelwellenextruder ZSK25 der Fa. Coperion, Werner und Pfleiderer (Deutschland) bei Schmelzetemperaturen von 270°C bis 300°C.

**Herstellung der Prüfkörper und Prüfung**

Die aus der jeweiligen Compoundierung resultierenden Granulate wurden auf einer Spritzgussmaschine (Fa. Arburg) bei einer Schmelzetemperatur von 260°C und einer Werkzeugtemperatur von 80°C zu Probekörpern verarbeitet.
Die Beschichtung der Prüfkörper erfolgte nach Reinigung der Spritzgußkörper mit Isopropanol und Beflammung durch Applikation des Lacks (Basislack) auf die Oberfläche mit einer Lackierpistole. Der Lack wurde anschließend 15 min bei 80°C getrocknet.
Danach wurde eine Schutzschicht (Klarlack) auf gleiche Weise appliziert und 30 min bei 80°C getrocknet.
Die Schichtdicke des resultierenden Lackaufbaus lag bei 45μm (Basislack 15 μm, Schutzschicht 30 μm).

Basislack:

Wörwag Einheitshydrobasislack "Schwarz" 113161.

Schutzschicht:

Wöropur Klarlack, hochglänzend 108728 mit Wöropur Härter 60738 (beide von Wörwag).
Die **Schmelzefließfähigkeit** (MVR) wird beurteilt anhand der Schmelzevolumenfließrate (MVR) gemessen gemäß ISO 1133 bei einer Temperatur von 260°C und mit einer Stempellast von 5 kg.
Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.
Die **Schmelzeviskosität** wurde nach ISO 11443 bei einer Temperatur von 260°C und einer Scherrate von 1000 $s^{-1}$ bestimmt.
Die Bestimmung der **Kerbschlagzähigkeit** ($a_k$) und der **Schlagzähigkeit** ($a_n$) erfolgt gemäß ISO 180/1A, bzw. ISO 180/1U bei Raumtemperatur (23°C) durch eine 10-fach-Bestimmung an Prüfstäben der Abmessung 80 mm x 10 mm x 4 mm.
Die **Reißdehnung** und der **Zug E-Modul** wird ermittelt bei Raumtemperatur (23°C) in Anlehnung an ISO 527-1,-2 an Schulterstäben der Abmessung 170 mm x 10 mm x 4 mm.
Die **Spannungrißbeständigkeit** unter Medieneinfluss (Environmental Stress Cracking = ESC) wird in Anlehnung an ISO 4599 an Prüfstäben der Abmessung 80 mm x 10 mm x 4 mm ermittelt bei Raumtemperatur (23°C). Als Maß für die Spannungsrißbeständigkeit dient dabei die Zeit bis zum Bruchversagen der Prüfkörper, die mittels einer Spannschablone mit einer externen Randfaserdehnung von 2,4 % beaufschlagt und vollständig in Rapsöl als Medium eingetaucht wurden.
Der **lineare thermische Ausdehnungskoeffizient (CLTE)** wird ermittelt nach DIN 53752 im Temperaturintervall von -20°C bis 80°C an einem Prüfkörper der Abmessungen 60 mm x 60 mm x 2 mm, jeweils parallel und senkrecht zur Schmelzefließrichtung bei der Prüfkörperherstellung.
Die Lackhaftung wird bestimmt mit Gitterschnittprüfung gemäß DIN ISO 2409 und mit Beständigkeitsprüfung gegen Druckwasserstrahl (Dampfstrahltest) gemäß DIN 55662 8.1/8.2.
Die erfindungsgemäßen Formteile weisen vorzugsweise eine Bewertung der Haftung des Lacks zur Basis gemäß Gitterschnittest kleiner oder gleich 1 ist, bevorzugt gleich 0, und eine Bewertung der Haftung nach Dampfstrahltest gleich 0 auf.
Die folgenden Beispiele dienen der weiteren Erläuterung der Erfindung.

Tabelle 1:

| **Zusammensetzung** | **V1** | V**2** | **3** | **4** | **5** | V**6** | V**7** |
|---|---|---|---|---|---|---|---|
| A | 49 | 49 | 49 | 49 | 49 | 49 | 49 |

(fortgesetzt)

| **Zusammensetzung** | **V1** | V2 | **3** | **4** | **5** | V6 | V7 |
|---|---|---|---|---|---|---|---|
| B.1 | 16 | 14 | 12 | 10 | 8 | 4 | 0 |
| B.2 | 8 | 8 | 8 | 8 | 8 | 8 | 8 |
| C | 6 | 6 | 6 | 6 | 6 | 6 | 6 |
| D-1 | 0 | 2 | 4 | 6 | 8 | 12 | 16 |
| E-1 | 20 | 20 | 20 | 20 | 20 | 20 | 20 |
| F-1 | 0,7 | 0,7 | 0,7 | 0,7 | 0,7 | 0,7 | 0,7 |
| F-2 | 0,1 | 0,1 | 0,1 | 0,1 | 0,1 | 0,1 | 0,1 |
| F-3 | 0,2 | 0,2 | 0,2 | 0,2 | 0,2 | 0,2 | 0,2 |
| F-4 | 0,6 | 0,6 | 0,6 | 0,6 | 0,6 | 0,6 | 0,6 |
| **Berchnete Hilfsgrößen** | | | | | | | |
| B (gesamt) | 24,00 | 22,00 | 20,00 | 18,00 | 16,00 | 12,00 | 8,00 |
| D/(A+D) | 0,0% | 3,9% | 7,5% | 10,9% | 14,0% | 19,7% | 24,6% |
| y | - | 10,4 | 4,7 | 2,8 | 1,9 | 0,9 | 0,4 |
| **Eigenschaften** | | | | | | | |
| MVR [ml/10min] | 12,7 | 15,6 | 12,9 | 12,63 | 12,35 | 14,7 | 14,8 |
| Schmelzeviskosität [Pas] | 225 | 339 | 245 | 254 | 262 | 291 | 306 |
| Vicat B120 [°C] | 130,7 | 123,1 | 127,1 | 125,1 | 124,3 | 122,7 | 123,4 |
| Izod Kerbschlagzähigkeit ($a_k$) [kJ/m$^2$] | 12,3 | 6,1 | 9,9 | 9,6 | 9,4 | 6,6 | 6,8 |
| Izod Schlagzähigkeit ($a_n$) [kJ/m$^2$] | 68,3 | 43,5 | 76,5 | 79,5 | 78,5 | 51,9 | 53 |
| Zug E-Modul [MPa] | 4991 | 4990 | 4926 | 4865 | 4828 | 4834 | 4725 |
| Reißdehnung [%] | 9,27 | 6,98 | 9,21 | 11,37 | 9,94 | 8,94 | 8,82 |
| ESC(Zeit bis Bruch) [h] | 02:50 | 02:20 | 02:40 | 03:00 | 03:00 | 03:30 | 07:00 |
| CLTE (parallel) [ppm/K] | 41 | 41 | 41 | 41 | 43 | 42 | 44 |
| CLTE (senkrecht) [ppm/K] | 41 | 41 | 42 | 42 | 42 | 42 | 44 |
| Bewertung Lackhaftung (Gitterschnitttest) | 5 | 0 | 0 | 0 | 0 | 0 | 0 |
| **Zusammensetzung** | | V8 | V9 | V10 | V11 | V12 | V13 |
| A | | 55,9 | 43,63 | 49 | 64,08 | 49 | 49 |
| B.1 | | 2,3 | 16 | 10 | 13,08 | 10 | 10 |
| B.2 | | 8 | 8 | 8 | 8 | 8 | 8 |
| C | | 6 | 6 | 6 | 6 | 6 | 6 |
| D-1 | | 6,8 | 5,34 | | 7,85 | 6 | 6 |
| D-2 | | | | 6 | | | |
| E-1 | | 20 | 20 | 20 | | | |
| E-2 | | | | | | | 20 |
| E-3 | | | | | | 20 | |
| F-1 | | 0,7 | 0,7 | 0,7 | 0,7 | 0,7 | 0,7 |
| F-2 | | 0,1 | 0,1 | 0,1 | 0,1 | 0,1 | 0,1 |
| F-3 | | 0,2 | 0,2 | 0,2 | 0,2 | 0,2 | 0,2 |

(fortgesetzt)

| Zusammensetzung | V8 | V9 | V10 | V11 | V12 | V13 |
|---|---|---|---|---|---|---|
| F-4 | 0,6 | 0,6 | 0,6 | 0,6 | 0,6 | 0,6 |
| **Berchnete Hilfsgrößen** | | | | | | |
| B (gesamt) | 10,28 | 24,00 | 18,00 | 21,08 | 18,00 | 18,00 |
| D/(A+D) | 10,9% | 10,9% | 10,9% | 10,9% | 10,9% | 10,9% |
| y | 1,3 | 4,3 | 2,8 | 2,5 | 2,8 | 2,8 |
| **Eigenschaften** | | | | | | |
| MVR [ml/10min] | 11,4 | 15,2 | 8,7 | 28,7 | 11,9 | 16,1 |
| Schmelzeviskosität [Pas] | 335 | 227 | 285 | 204 | 240 | 251 |
| Vicat B120 [°C] | 126,8 | 121,1 | 132,3 | 116,6 | 122,4 | 119,6 |
| Izod Kerbschlagzähigkeit ($a_k$) [kJ/m$^2$] | 8,5 | 6,4 | 5,3 | 35 | 8,4 | 7,2 |
| Izod Schlagzähigkeit ($a_n$) [kJ/m$^2$] | 62,5 | 39,4 | 35,4 | nicht gebrochen | 26,8 | 99,8 |
| Zug E-Modul [MPa] | 4685 | 4936 | 4779 | 2439 | 6260 | 3893 |
| Reißdehnung [%] | 9,64 | 6,79 | 4,69 | 107,3 | 2,14 | 17,34 |
| ESC(Zeit bis Bruch) [h] | 04:30 | 02:50 | 02:15 | 02:15 | 02:15 | 15:00 |
| CLTE (parallel) [ppm/K] | 41 | 41 | 40 | 70 | 37 | 50 |
| CLTE (senkrecht) [ppm/K] | 43 | 42 | 42 | 73 | 49 | 55 |
| Bewertung Lackhaftung (Gitterschnitttest) | 0 | 1 | 0 | 0 | 0 | 0 |
| Bewertung Lackhaftung (Dampfstrahltest) | 1 | 0 | 2 | 1 | 0 | 0 |

## Patentansprüche

**1.** Polymerzusammensetzungen mit verbesserter Lackhaftung enthaltend

A) 40 bis 62 Gew.-Teile mindestens eines Polymers ausgewählt aus der Gruppe der aromatischen Polycarbonate und aromatischen Polyestercarbonate,
B) 14 bis 20 Gew.-Teile mindestens eines kautschukfreien und/oder kautschukmodifizierten Vinyl(co)polymerisats, wobei die kautschukmodifizierten Vinyl(co)polymerisate hergestellt sind im Masse-, Lösungs- oder Suspensionspolymerisationsverfahren,
C) 4 bis 10 Gew.-Teile mindestens eines kautschukmodifizierten Vinyl(co)polymerisats, hergestellt im Emulsionspolymerisationverfahren,
D) 4 bis 10 Gew.-Teile Polybutylenterephthalat,
E) 15 bis 25 Gew.-Teile Talk
F) 0,3 bis 5,0 Gew.-Teile, mindestens eines Polymeradditivs,

wobei die Summe der Gewichtsteile der Komponenten A+B+C+D+E+F in der Zusammensetzung 100 ergibt.

**2.** Zusammensetzung nach Anspruch 1, **dadurch gekennzeichnet, dass** die Pfropfgrundlage der Komponente C) ein Silikonacrylat-Komposit-Kautschuk ist.

**3.** Zusammensetzung nach einem der vorhergehenden Ansprüche, **dadurch gekennzeichnet, dass** als Komponente B eine Mischung aus einem kautschukfreien und einem kautschukhaltigen Vinyl(co)Polymerisat eingesetzt wird.

**4.** Zusammensetzung nach einem der vorhergehenden Ansprüche, **dadurch gekennzeichnet, dass** das Gewichtsverhältnis y aus freiem Vinyl(co)polymerisat aus den Komponenten B und C zu aromatischem Polyester gemäß Komponente D im Bereich 0,5 bis 6 ist.

5. Zusammensetzung nach einem der vorhergehenden Ansprüche, **dadurch gekennzeichnet, dass** Komponente D in einer Konzentration von 5 bis 25 Gew.-%, bezogen auf die Summe aus Komponenten A und D enthalten ist.

6. Formteil hergestellt aus einer Zusammensetzung nach den Ansprüchen 1 bis 5, **dadurch gekennzeichnet, dass** mindestens eine Seite des Formteils mit einem Polyurethansystem, ausgewählt aus der Gruppe, die PU-Lack, PU-Schaum und PU-Haut umfaßt, beschichtet ist, wobei das Polyurethansystem in direktem Kontakt mit der Basis ist und die Polyurethanschichtdicke 1 $\mu$m bis zu 20 cm beträgt.

7. Formteil nach Anspruch 6, **dadurch gekennzeichnet, dass** das Polyurethansystem in direktem Kontakt mit der Basis ein Lack mit einer Schichtdicke von 5 - 100 $\mu$m ist.

8. Formteil nach Anspruch 6 oder 7, **dadurch gekennzeichnet, dass** das Polyurethansystem in direktem Kontakt mit der Basis ein 1-Komponenten Polyurethanlack ist.

9. Formteil nach Anspruch 6 oder 7, **dadurch gekennzeichnet, daß** das Polyurethansystem in direktem Kontakt mit der Basis ein 2-Komponenten Polyurethanlack ist, im wesentlichen enthaltend:

   (a) Polyisocyanate,
   (b) Verbindungen mit gegenüber Isocyanaten reaktiven Gruppen, ,
   (c) gegebenenfalls weitere Zusatzstoffe und Hilfsmittel,

   wobei die Mengen von (a) + (b) von 20 bis 100 Gew.-Teilen, die Menge an (c) von 0 bis 80 Gew.-Teilen betragen, mit der Maßgabe, dass die Summe der Gewichtsteile der Einzelkomponenten (a) bis (c) 100 beträgt.

10. Formteil nach einem der Ansprüche 6 - 9, **dadurch gekennzeichnet, dass** es eine Lackschicht in direktem Kontakt mit der Basis (Basislack) und mindestens eine Schutzschicht (Decklack) aufweist.

11. Formteil nach einem der Ansprüche 6 - 10, **dadurch gekennzeichnet, dass** die Bewertung der Haftung des Lacks zur Basis gemäß Gitterschnittest kleiner oder gleich 1 ist und die Bewertung der Haftung nach Dampfstrahltest gleich 0 ist.

12. Verwendung der Zusammensetzungen nach einem der Ansprüche 1 - 5 zur Herstellung von primerlos mit einem Polyurethansystem beschichteten Verbundbauteilen mit einer verbesserten Haftung des Polyurethansystems auf der Basis.

## Claims

1. Polymer compositions with improved lacquer adhesion containing

   A) 40 to 62 parts by wt. of at least one polymer chosen from the group of aromatic polycarbonates and aromatic polyester carbonates,
   B) 14 to 20 parts by wt. of at least one rubber-free and/or rubber-modified vinyl (co)polymer, the rubber-modified vinyl (co)polymers being prepared in the bulk, solution or suspension polymerization process,
   C) 4 to 10 parts by wt. of at least one rubber-modified vinyl (co)polymer prepared in the emulsion polymerization process,
   D) 4 to 10 parts by wt. of polybutylene terephthalate,
   E) 15 to 25 parts by wt. of talc
   F) 0.3 to 5.0 parts by wt. of at least one polymer additive,

   wherein the sum of the parts by weight of components A+B+C+D+E+F in the composition is 100.

2. Composition according to claim 1, **characterized in that** the graft base of component C) is a silicone/acrylate composite rubber.

3. Composition according to one of the preceding claims, **characterized in that** a mixture of a rubber-free and a rubber-containing vinyl (co)polymer is employed as component B.

4. Composition according to one of the preceding claims, **characterized in that** the weight ratio y of free vinyl (co)polymer from components B and C to aromatic polyester according to component D is in the range of 0.5 to 6.

5. Composition according to one of the preceding claims, **characterized in that** it contains component D in a concentration of from 5 to 25 wt.%, based on the sum of components A and D.

6. Shaped part produced from a composition according to claims 1 to 5, **characterized in that** at least one side of the moulded part is coated with a polyurethane system chosen from the group which includes PU lacquer, PU foam and PU skin, wherein the polyurethane system is in direct contact with the base and the polyurethane layer thickness is 1 μm up to 20 cm.

7. Shaped part according to claim 6, **characterized in that** the polyurethane system in direct contact with the base is a lacquer having a layer thickness of 5 - 100 μm.

8. Shaped part according to claim 6 or 7, **characterized in that** the polyurethane system in direct contact with the base is a 1-component polyurethane lacquer.

9. Shaped part according to claim 6 or 7, **characterized in that** the polyurethane system in direct contact with the base is a 2-component polyurethane lacquer essentially containing:

   (a) polyisocyanates,
   (b) compounds having groups which are reactive towards isocyanates,
   (c) optionally further additives and auxiliary substances,

   wherein the amounts of (a) + (b) are from 20 to 100 parts by wt., the amount of (c) is from 0 to 80 parts by wt., with the proviso that the sum of the parts by weight of the individual components (a) to (c) is 100.

10. Shaped part according to one of claims 6 - 9, **characterized in that** it has a lacquer layer in direct contact with the base (base coat) and at least one protective layer (top coat).

11. Shaped part according to one of claims 6 - 10, **characterized in that** the rating for adhesion of the lacquer to the base according to the cross-hatch test is less than or equal to 1 and the rating for adhesion according to the steam jet test is equal to 0.

12. Use of the compositions according to one of claims 1 - 5 for the production of composite components which are coated with a polyurethane system without a primer and have improved adhesion of the polyurethane system to the base.

**Revendications**

1. Composition polymère dotée d’une adhérence de vernis améliorée, contenant :

   A) 40 à 62 parties en poids d’au moins un polymère choisi dans le groupe des polycarbonates aromatiques et des polyester-carbonates aromatiques,
   B) 14 à 20 parties en poids d’au moins un (co)polymère de vinyle sans caoutchouc et/ou modifié par un caoutchouc, les (co)polymères de vinyle modifiés par un caoutchouc étant fabriqués par le procédé de polymérisation en masse, en solution ou en suspension,
   C) 4 à 10 parties en poids d’au moins un (co)polymère de vinyle modifié par un caoutchouc, fabriqué par le procédé de polymérisation en émulsion,
   D) 4 à 10 parties en poids de polybutylène téréphtalate,
   E) 15 à 25 parties en poids de talc,
   F) 0,3 à 5,0 parties en poids d’au moins un additif polymère,

   la somme des parties en poids des composants A+B+C+D+E+F dans la composition étant de 100.

2. Composition selon la revendication 1, **caractérisée en ce que** la base de greffage du composant C) est un caoutchouc composite d’acrylate de silicone.

3. Composition selon l'une quelconque des revendications précédentes, **caractérisée en ce qu'**un mélange d'un (co)polymère de vinyle sans caoutchouc et contenant un caoutchouc est utilisé en tant que composant B.

4. Composition selon l'une quelconque des revendications précédentes, **caractérisée en ce que** le rapport en poids y entre le (co)polymère de vinyle libre des composants B et C et le polyester aromatique selon le composant D est dans la plage allant de 0,5 à 6.

5. Composition selon l'une quelconque des revendications précédentes, **caractérisée en ce que** le composant D est contenu en une concentration de 5 à 25 % en poids, par rapport à la somme des composants A et D.

6. Pièce moulée fabriquée à partir d'une composition selon les revendications 1 à 5, **caractérisée en ce qu'**au moins un côté de la pièce moulée est revêtu avec un système de polyuréthane, choisi dans le groupe comprenant un vernis de PU, une mousse de PU et une peau de PU, le système de polyuréthane étant en contact direct avec la base et l'épaisseur de couche de polyuréthane étant de 1 $\mu$m à 20 cm.

7. Pièce moulée selon la revendication 6, **caractérisée en ce que** le système de polyuréthane en contact direct avec la base est un vernis ayant une épaisseur de couche de 5 à 100 $\mu$m.

8. Pièce moulée selon la revendication 6 ou 7, **caractérisée en ce que** le système de polyuréthane en contact direct avec la base est un vernis de polyuréthane à 1 composant.

9. Pièce moulée selon la revendication 6 ou 7, **caractérisée en ce que** le système de polyuréthane en contact direct avec la base est un vernis de polyuréthane à 2 composants, contenant essentiellement :

   (a) des polyisocyanates,
   (b) des composés contenant des groupes réactifs avec les isocyanates,
   (c) éventuellement d'autres additifs et adjuvants,

   les quantités de (a)+(b) étant de 20 à 100 parties en poids, la quantité de (c) étant de 0 à 80 parties en poids, à condition que la somme des parties en poids des composants individuels (a) à (c) soit de 100.

10. Pièce moulée selon l'une quelconque des revendications 6 à 9, **caractérisée en ce qu'**elle comprend une couche de vernis en contact direct avec la base (vernis de base) et au moins une couche de protection (couche supérieure).

11. Pièce moulée selon l'une quelconque des revendications 6 à 10, **caractérisée en ce que** la mesure de l'adhérence du vernis à la base selon le test de quadrillage est inférieure ou égale à 1, et la mesure de l'adhérence selon le test au jet de vapeur est égale à 0.

12. Utilisation des compositions selon l'une quelconque des revendications 1 à 5 pour la fabrication de composants composites revêtus sans amorce avec un système de polyuréthane, dotés d'une adhérence améliorée du système de polyuréthane sur la base.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1355988 A1
- WO 2011015286 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE OS3704657 A
- DE OS3704655 A
- DE OS3631540 A
- DE OS3631539 A
- EP 249964 A
- US 2891920 A
- US 3294725 A
- EP 430134 A
- US 4888388 A
- US 4218543 A
- DE 2442101 A
- DE 2844922 A
- DE 2646141 A
- WO 2004000905 A
- EP 0540985 A
- EP 0959087 A
- DE 10007821 A
- DE 10024624 A
- WO 0188006 A
- EP 0959115 A


### In der Beschreibung aufgeführte Nicht-Patentliteratur


- **SCHNELL.** Chemistry and Physics of Polycarbonates. Interscience Publishers, 1964
- **W. SCHOLTAN ; H. LANGE.** *Kolloid, Z. und Z. Polymere,* 1972, vol. 250, 782-796
- **M. HOFFMANN ; H. KRÖMER ; R. KUHN.** Polymeranalytik. Georg Thieme-Verlag, 1977, vol. I und II
- Kunststoff-Handbuch. Carl-Hanser-Verlag, 1973, vol. VIII, 695 ff
- Polyurethanes Chemistry and Technology. High Polymers. Interscience Publishers, vol. XVI
- HIGH POLYMERS. vol. 1, 32-42, 44, , 54
- HIGH POLYMERS. 1984, vol. II, 5-6, 198-199